(19) Europäisches Patentamt
European Patent Office
Office européen des brevets

(11) EP 4 800 156 A1

# (12) EUROPEAN PATENT APPLICATION
published in accordance with Art. 153(4) EPC

(43) Date of publication:
**02.09.2026 Bulletin 2026/36**

(21) Application number: **24904042.9**

(22) Date of filing: **21.11.2024**

(51) International Patent Classification (IPC):
***C25B 1/04*** *(2021.01)* ***C25B 9/19*** *(2021.01)*
***C25B 13/08*** *(2006.01)* ***C25B 9/63*** *(2021.01)*
***C25B 9/67*** *(2021.01)*

(52) Cooperative Patent Classification (CPC):
**C25B 1/04; C25B 9/19; C25B 9/63; C25B 9/67; C25B 13/08**

(86) International application number:
**PCT/KR2024/018459**

(87) International publication number:
**WO 2025/127476 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.12.2023 KR 20230180997**
**14.11.2024 KR 20240162346**

(71) Applicant: **Kolon Industries, Inc.**
**Seoul 07793 (KR)**

(72) Inventors:
- **LEE, Ju Sung**
  **Seoul 07793 (KR)**
- **KIM, Jun Young**
  **Seoul 07793 (KR)**
- **KIM, Jung Ho**
  **Seoul 07793 (KR)**
- **LIM, Youngjoon**
  **Seoul 07793 (KR)**
- **PARK, Hyun Jin**
  **Seoul 07793 (KR)**

(74) Representative: **Vossius & Partner**
**Patentanwälte Rechtsanwälte mbB**
**Siebertstraße 3**
**81675 München (DE)**

## (54) MEMBRANE-ELECTRODE ASSEMBLY FOR WATER ELECTROLYSIS CELL, AND WATER ELECTROLYSIS CELL COMPRISING SAME

(57) Provided is a membrane-electrode assembly for a water electrolysis cell, including: a polymer electrolyte membrane having an active area and an inactive area surrounding the active area; a hydrogen generation electrode positioned on a first surface of the active area of the polymer electrolyte membrane; an oxygen generation electrode positioned on a second surface of the active area of the polymer electrolyte membrane; a first subgasket disposed on a first surface of the inactive area of the polymer electrolyte membrane and surrounding the hydrogen generation electrode; and a second subgasket disposed on a second surface of the inactive area of the polymer electrolyte membrane and surrounding the oxygen generation electrode, wherein the first subgasket has a first window accommodating the hydrogen generation electrode, and a first water supply path surrounding the first window and exposing the inactive area of the polymer electrolyte membrane.

[FIG. 1]

P11
110a
121
131
P11
110a
122
110
132

EP 4 800 156 A1

## Description

## [Technical Field]

The present disclosure relates to a membrane-electrode assembly for a water electrolysis cell and a water electrolysis cell including the same.

## [Background Art]

Due to an increase in demand for alternative energy replacing fossil fuels, while interest in high-efficiency, inexpensive, and environmentally friendly energy conversion or storage systems is increasing, fuel production through water electrolysis, which has a high possibility of commercialization as an important alternative considering environmental and energy issues, is receiving much attention. Water electrolysis is a technology that produces hydrogen and oxygen by electrochemically decomposing water.

Among them, in a polymer electrolyte membrane water electrolysis cell (PEMWE), a membrane-electrode assembly (MEA) that actually generates hydrogen has a structure in which an oxygen evolution reaction electrode, which is an electrode in which an oxygen evolution reaction (OER) occurs, and a hydrogen evolution reaction electrode, in which a hydrogen evolution reaction (HER) occurs, are positioned with a polymer electrolyte membrane including a cation conductive polymer or an anion conductive polymer interposed therebetween.

In the polymer electrolyte membrane water electrolysis cell, the oxygen generation electrode is in contact with water and the hydrogen generation electrode is not separately humidified, so that a water content of the polymer electrolyte membrane has a concentration gradient in a thickness direction.

As the water content of the polymer electrolyte membrane increases, ion conductivity increases, and thus, in the polymer electrolyte membrane water electrolysis cell, there is a limitation due to the low water content of the hydrogen generation electrode. In addition, heat generation may occur when the polymer electrolyte membrane water electrolysis cell is operated at a high current or a high voltage, and temperature control may be difficult when heat generation occurs.

## [Disclosure]

## [Description of the Drawings]

[Technical Problem]

An aspect of the present disclosure is to provide a membrane-electrode assembly for a water electrolysis cell capable of maximizing performance of a water electrolysis cell by directly supplying water to a polymer electrolyte membrane to increase a water content of the polymer electrolyte membrane, thereby improving ion conductivity of the polymer electrolyte membrane, and additionally cooling the membrane-electrode assembly to reduce required energy.

[Technical Solution]

According to an aspect, a membrane-electrode assembly for a water electrolysis cell includes: a polymer electrolyte membrane having an active area and an inactive area surrounding the active area; a hydrogen generation electrode positioned on a first surface of the active area of the polymer electrolyte membrane; an oxygen generation electrode positioned on a second surface of the active area of the polymer electrolyte membrane; a first subgasket disposed on a first surface of the inactive area of the polymer electrolyte membrane and surrounding the hydrogen generation electrode; and a second subgasket disposed on a second surface of the inactive area of the polymer electrolyte membrane and surrounding the oxygen generation electrode, wherein the first subgasket has a first window accommodating the hydrogen generation electrode, and a first water supply path surrounding the first window and exposing the inactive area of the polymer electrolyte membrane.

The first window may penetrate the first subgasket to expose the hydrogen generation electrode.

The first water supply path may penetrate the first subgasket to expose the inactive area of the polymer electrolyte membrane.

The first window and the first water supply path may be vacant holes.

The first water supply path may extend to surround four sides of the first window.

One end and the other end of the first water supply path may not meet and may be spaced apart from each other.

The second subgasket may have a second window accommodating the oxygen generation electrode.

The second subgasket may not have a water supply path exposing the inactive area of the polymer electrolyte membrane.

The oxygen generation electrode may include a noble metal oxide catalyst including iridium oxide, an oxide of an iridium alloy, or a combination thereof.

The membrane-electrode assembly for a water electrolysis cell may further include: a first gas diffusion layer positioned on the hydrogen generation electrode; and a second gas diffusion layer positioned on the oxygen generation electrode.

The first gas diffusion layer may include an electrically conductive porous member including carbon paper, carbon cloth, carbon felt, metal paper, metal cloth, metal felt, or a combination thereof.

The second gas diffusion layer may include a plurality of fibers integrated in a form including a plurality of pores, and the plurality of fibers may include a metal oxide or a metal.

The membrane-electrode assembly for a water electrolysis cell may further include: a first gasket disposed on the first subgasket and surrounding the first gas diffusion layer; and a second gasket disposed on the second subgasket and surrounding the second gas diffusion layer.

The first gasket may have a third window accommodating the first gas diffusion layer, and a third water supply path surrounding the third window and exposing the first water supply path of the first gas diffusion layer.

According to an aspect, a water electrolysis cell includes: the above-described membrane-electrode assembly; a first separator positioned on a first surface of the membrane-electrode assembly; and a second separator positioned on a second surface of the membrane-electrode assembly, wherein the first separator has a flow channel positioned in a region corresponding to the hydrogen generation electrode, and a water channel surrounding the first flow channel and positioned in a region corresponding to the first water supply path.

The water channel may extend to surround four sides of the flow channel.

One end and the other end of the water channel may be spaced apart from each other without meeting.

One end of the water channel may have a water inlet.

The other end of the water channel may have a water outlet.

An area ratio of the water channel to a total area of the first separator may be 10 % to 80 %.

A depth ratio of the water channel to a total thickness of the first separator may be 5% to 40 %.

The water electrolysis cell may further include: a first gas diffusion layer positioned on the hydrogen generation electrode; and a second gas diffusion layer positioned on the oxygen generation electrode.

The second gas diffusion layer includes a plurality of fibers integrated in a form including a plurality of pores, and the plurality of fibers may include a metal oxide or a metal.

The water electrolysis cell may further include a first gasket disposed on the first subgasket and surrounding the first gas diffusion layer; and a second gasket disposed on the second subgasket and surrounding the second gas diffusion layer.

The first gasket may have a third window accommodating the first gas diffusion layer, and a third water supply path surrounding the third window and exposing the first water supply path of the first gas diffusion layer.

[**Advantageous Effects**]

According to an aspect, a membrane-electrode assembly for a water electrolysis cell may directly supply water to a polymer electrolyte membrane to increase the water content of the polymer electrolyte membrane, thereby improving the ion conductivity of the polymer electrolyte membrane, and additionally cool the membrane-electrode assembly to decrease required energy, thereby maximizing the performance of the water electrolysis cell.

[**Description of the Drawings**]

FIG. 1 is a cross-sectional view of a membrane-electrode assembly according to an embodiment.
FIG. 2 is a plan view of the membrane-electrode assembly according to FIG. 1.
FIG. 3 is a cross-sectional view of a membrane-electrode assembly according to an embodiment.
FIG. 4 is a plan view of the membrane-electrode assembly according to FIG. 3.
FIG. 5 is a cross-sectional view of a membrane-electrode assembly according to an embodiment.
FIG. 6 is a plan view of the membrane-electrode assembly according to FIG. 5.
FIG. 7 is a cross-sectional view of a water electrolysis cell according to an embodiment.
FIG. 8 is a plan view of the separator illustrated in FIG. 7, illustrating a surface facing the membrane-electrode assembly.

[**Best Mode**]

Advantages and features of the technology described below, and methods of achieving them, will become apparent with reference to implementations described below in detail in conjunction with the accompanying drawings. However, implemented forms may not be limited to the implementations disclosed below. Unless otherwise defined, all terms (including technical and scientific terms) used in this specification may be used with meanings commonly understood by those of ordinary skill in the art. In addition, terms defined in a commonly used dictionary are not ideally or excessively interpreted unless explicitly specifically defined.

Throughout the specification, when a portion "includes" or "comprises" an element, this means that it may further include or comprise other elements rather than excluding other elements unless specifically stated otherwise.

Hereinafter, embodiments of the present disclosure will be described in detail with reference to the accompanying drawings. However, the embodiments described below are provided only for an illustrative purpose to help a clear understanding of the present disclosure, and do not limit the scope of the present disclosure.

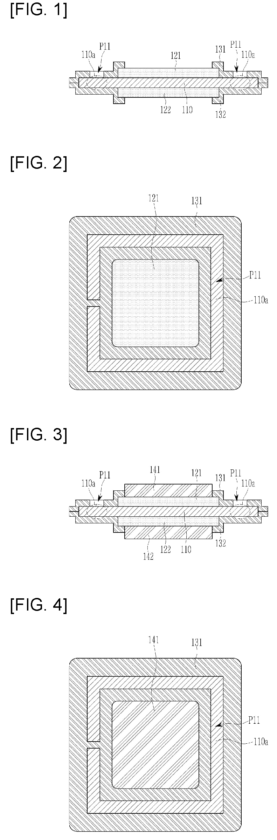

FIG. 1 is a cross-sectional view of a membrane-electrode assembly according to an embodiment. FIG. 2 is a plan view of the membrane-electrode assembly according to FIG. 1.

Referring to FIGS. 1 and 2, a membrane-electrode assembly for a water electrolysis cell includes a polymer electrolyte membrane 110, a hydrogen generation electrode 121 positioned on a first surface of the polymer electrolyte membrane 110, an oxygen generation electrode 122 positioned on a second surface (a surface on an opposite side of the first surface) of the polymer electrolyte membrane 110, a first subgasket 131 positioned on the first surface of the polymer electrolyte membrane 110, and a second subgasket 132 positioned on the second surface of the polymer electrolyte membrane 110.

For example, the polymer electrolyte membrane 110 may include a porous support including a plurality of pores, and an ion conductor filling internal pores of the porous support.

As an example, the porous support may include a highly fluorinated polymer having excellent resistance to thermal and chemical decomposition, for example, a perfluorinated polymer. For example, the porous support may be polytetrafluoroethylene (PTFE) or a copolymer of tetrafluoroethylene and $CF_2=CFC_nF_{2n+1}$ (n is an integer of 1 to 5) or $CF_2=CFO-(CF_2CF(CF_3)O)_mC_nF_{2n+1}$ (m is an integer of 0 to 15, and n is an integer of 1 to 15).

As an example of the porous support, the porous support may be a nonwoven fibrous web consisting of a plurality of randomly oriented fibers.

The nonwoven fibrous web means a sheet having a structure of individual fibers or filaments that are interlaid, but not in the same manner as a woven cloth. The nonwoven fibrous web may be manufactured by a method including carding, garneting, air-laying, wet-laying, melt blowing, spunbonding, or stitch bonding.

As another example of the porous support in the form of the nonwoven fibrous web, the porous support may include a nanoweb in which nanofibers are integrated in a nonwoven fabric form including a plurality of pores.

For the nanofibers, a hydrocarbon-based polymer exhibiting excellent chemical resistance and having hydrophobicity, thereby having no concern of form deformation due to moisture in a highly humid environment, may be used. For example, the hydrocarbon-based polymer may include nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, copolymers thereof, or combinations thereof, and among these, a polyimide having more excellent heat resistance, chemical resistance, and form stability may be used.

A porosity of the porous support may be greater than or equal to 45 %, and for example, may be greater than or equal to 60 %. Meanwhile, the porous support may have a porosity of less than or equal to 90 %. If the porosity of the porous support is greater than 90 %, form stability is degraded, whereby a subsequent process may not proceed smoothly. The porosity may be calculated by a ratio of an air volume to a total volume of the porous support according to Equation 1 below. At this time, the total volume may be calculated by preparing a sample in a rectangular form and measuring a width, a length, and a thickness, and the air volume may be obtained by measuring a mass of the sample and then subtracting a polymer volume inversely calculated from a density from the total volume.

$$\text{Porosity (\%)} = (\text{Air volume in porous support} / \text{Total volume of porous support}) \times 100 \quad \text{[Equation 1]}$$

For example, the polymer electrolyte membrane 110 may be a polymer electrolyte membrane 110 in a form of a reinforced composite membrane in which the ion conductor is filled in the internal pores of the porous support.

At this time, the polymer electrolyte membrane 110 may further include a first ion conductor layer positioned on one surface of the porous support and a second ion conductor layer positioned on the other surface of the porous support. The first ion conductor layer and the second ion conductor layer may be formed as the ion conductor remaining after filling

the internal pores of the porous support forms a thin film on the surface of the porous support.

The ion conductor may include a main chain, a side chain branched from the main chain, and an ion exchange group substituted in the side chain.

For example, the ion conductor may include a cation exchange group. That is, the polymer electrolyte membrane 110 may be applied to a proton exchange membrane water electrolysis (PEMWE) cell.

In the proton exchange membrane water electrolysis cell, water is supplied toward the oxygen generation electrode 122, and hydrogen ions ($H^+$) are moved toward the hydrogen generation electrode 121 through the polymer electrolyte membrane 110.

For example, the cation exchange group included in the ion conductor may include a sulfonic acid group, an ethylbenzene sulfonic acid group, a carboxyl group, a boronic acid group, a phosphoric acid group, an imide group, a sulfonimide group, a sulfonamide group, a sulfonic acid fluoride group, or a combination thereof, and for example, may be a sulfonic acid group.

For example, the main chain of the ion conductor including the cation exchange group may include poly(perfluorosulfonic acid), poly(perfluorocarboxylic acid), poly(tetrafluoroethylene), fluorinated polyarylene, polyimide (PI), polyarylethersulfone (PAES), polyaryletherketone, polyetheretherketone (PEEK), polybenzimidazole (PBI), polysulfone (PSU), polystyrene (PS), polyphosphazene, polyquinoxaline, polyketone, polyether sulfone, polyether ketone, polyphenylene sulfone, polyphenylene sulfide, polyphenylene sulfide sulfone, polyphenylene sulfide sulfone nitrile, polyarylene ether, polyarylene ether nitrile, polyarylene ether ether nitrile, polyarylene ether sulfone ketone, polyethylene, polyphenylene ether, polypyrrole, polythiophene, polycarbazole, polyaniline, polyindole, polypyrrole, or a combination thereof.

For example, the ion conductor may include an anion exchange group. That is, the polymer electrolyte membrane 110 may be applied to an anion exchange membrane water electrolysis (AEMWE) cell.

In the anion exchange membrane water electrolysis cell, water is supplied toward the hydrogen generation electrode 121, and hydroxide ions ($OH^-$) are moved toward the oxygen generation electrode 122 through the polymer electrolyte membrane 110.

For example, the anion exchange group included in the ion conductor may include an ammonium group, a pyridine group, a triazole group, a tetraalkylammonium group, an imidazolium group, a benzimidazolium group, a cyclic ammonium group, or a combination thereof, and for example, may be an ammonium group.

For example, a main chain of the ion conductor including the anion exchange group may include polyphenylene oxide, polyphenylene, polyfluorene, poly(aryl piperidinium), polynorbornene , polystyrene (PS), polybenzimidazole (PBI), polyphenylene sulfide , polysulfone (PSU), polyaryletherketone, polyethylene, polyphenylene ether, polypyrrole, polythiophene, polycarbazole, polyaniline, polyindole, polypyrrole, or a combination thereof.

The hydrogen generation electrode 121 and the oxygen generation electrode 122 are aligned with each other with the polymer electrolyte membrane 110 therebetween, and the polymer electrolyte membrane 110 has an active area transferring a cation or an anion between the hydrogen generation electrode 121 and the oxygen generation electrode 122 and an inactive area 110a surrounding the active area.

For example, the active area of the polymer electrolyte membrane 110 is an area contacting the hydrogen generation electrode 121 and the oxygen generation electrode 122, and the inactive area 110a may be an area not contacting the hydrogen generation electrode 121 and the oxygen generation electrode 122.

The hydrogen generation electrode 121 may be disposed on a first surface of the active area of the polymer electrolyte membrane 110, and the oxygen generation electrode 122 may be disposed on a second surface of the active area of the polymer electrolyte membrane 110.

The hydrogen generation electrode 121 and the oxygen generation electrode 122 may each include a catalyst layer.

For example, the catalyst layer may include a noble metal oxide. The noble metal oxide may be iridium oxide, an oxide of an iridium alloy, or a combination thereof. For example, the noble metal oxide may be $IrO_x$ (x is an integer of 1 to 3), $IrMO_x$ (M includes Ru, Pt, Sn, Se, Zn, Au, Te, Nb, or a combination thereof, and x is an integer of 1 to 3), or a combination thereof.

For example, the catalyst layer may include a noble metal, and the noble metal may be a platinum-based noble metal. For example, the platinum-based noble metal (platinum based precious metal) may include platinum (Pt) and/or a Pt-M alloy. M may include palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh). For example, the Pt-M alloy may include Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a combination thereof.

For example, the catalyst layer of the hydrogen generation electrode 121 may include a noble metal, and the noble metal may include a platinum-based noble metal. The catalyst layer of the oxygen generation electrode 122 may include a noble metal oxide, and the noble metal oxide may include iridium oxide, an oxide of an iridium alloy, or a

combination thereof.

The catalyst layer may further include a support supporting the noble metal oxide or the noble metal. The support supporting the noble metal oxide may be, for example, titanium dioxide ($TiO_2$). The support supporting the noble metal may be a carbon-based support, and for example, the carbon-based support may include graphite, super P, carbon fiber, carbon sheet, carbon black, Ketjen Black, Denka black, acetylene black, carbon nanotube (CNT), carbon sphere, carbon ribbon, fullerene, activated carbon, carbon nanofiber, carbon nanowire, carbon nanoball, carbon nanohorn, carbon nanocage, carbon nanoring, ordered nano-/mesoporous carbon, carbon aerogel, mesoporous carbon, graphene, stabilized carbon, activated carbon, or a combination thereof.

The catalyst layer may further include an ion conductor to improve adhesion and transfer hydrogen ions. A description of the ion conductor that may be included in the catalyst layer is the same as that described in the polymer electrolyte membrane 110, and thus a repeated description thereof will be omitted. The ion conductor included in the catalyst layer and the ion conductor included in the polymer electrolyte membrane 110 may be the same or different.

The first subgasket 131 may be disposed on the first surface of the inactive area 110a of the polymer electrolyte membrane 110, and the second subgasket 132 may be disposed on the second surface of the inactive area 110a of the polymer electrolyte membrane 110.

The first and second subgaskets 131 and 132 may prevent an edge portion of the polymer electrolyte membrane 110 from being damaged due to repetitive swelling and contraction during operation of the water electrolysis cell, improve low handling of the membrane-electrode assembly due to the extremely thin polymer electrolyte membrane 110, and prevent leakage of a fluid, for example, hydrogen gas or oxygen gas.

The first and second subgaskets 131 and 132 respectively have a first window and a second window to accommodate the hydrogen generation electrode 121 and the oxygen generation electrode 122, and expose the hydrogen generation electrode 121 and the oxygen generation electrode 122. For example, the first window may be a hole positioned at a center portion of the first subgasket 131 and penetrating the first subgasket 131 in a thickness direction. In addition, the second window may be a hole positioned at a center portion of the second subgasket 132 and penetrating the second subgasket 132 in a thickness direction. That is, the first and second windows may be vacant holes.

In other words, when a surface of the first subgasket 131 facing the hydrogen generation electrode 121 is referred to as a first surface and a surface opposite to the first surface is referred to as a second surface, the hydrogen generation electrode 121 may penetrate the first surface and the second surface of the first subgasket 131, and the hydrogen generation electrode 121 may be exposed to the second surface of the first subgasket 131. In addition, when a surface of the second subgasket 132 facing the oxygen generation electrode 122 is referred to as a first surface and a surface opposite to the first surface is referred to as a second surface, the oxygen generation electrode 122 may penetrate the first surface and the second surface of the second subgasket 132, and the oxygen generation electrode 122 may be exposed to the second surface of the second subgasket 132. The first subgasket 131 may surround the hydrogen generation electrode 121, and the second subgasket 132 may surround the oxygen generation electrode 122.

The first subgasket 131 has a first water supply path P11 corresponding to the inactive area 110a of the polymer electrolyte membrane 110. In other words, the first water supply path P11 of the first subgasket 131 may overlap the inactive area 110a of the polymer electrolyte membrane 110 in a thickness direction.

For example, in a plan view of the first subgasket 131, the first water supply path P11 may be positioned in a region corresponding to the inactive area 110a of the polymer electrolyte membrane 110. The first water supply path P11 may be positioned to be spaced apart from the first window by a predetermined distance, and may surround the first window. For example, the first water supply path P11 may extend to surround four sides of the first window. However, one end and the other end of the first water supply path P11 may not meet and may be spaced apart from each other. Accordingly, the first subgasket 131 may have a single connected configuration without the first window portion and the first water supply path P11 portion being separated.

The first water supply path P11 may be a hole penetrating the first subgasket 131 in a thickness direction. That is, the first water supply path P11 may be a vacant hole. Accordingly, the inactive area 110a of the polymer electrolyte membrane 110 may be exposed to the second surface of the first subgasket 131 through the first water supply path P11 of the first subgasket 131.

During operation of the water electrolysis cell or an activation process of the polymer electrolyte membrane 100, water is supplied to the first water supply path P11, which is a vacant hole, so that water flows along the first water supply path P11.

When water reaches the inactive area 110a of the polymer electrolyte membrane 110 through the first water supply path P11 of the first subgasket 131, a water concentration difference occurs between the inactive area 110a and the active area of the polymer electrolyte membrane 110. As a result, according to Fick's law of diffusion that water flows from a place having a high water concentration to a place having a low water concentration, water flows from the inactive area 110a to the active area. By directly supplying water to the polymer electrolyte membrane 110 to increase the water content of the polymer electrolyte membrane 110, thereby improving the ion conductivity of the polymer electrolyte membrane 110, and by additionally cooling the membrane-electrode assembly to reduce required energy, the performance of the water

electrolysis cell may be maximized.

Meanwhile, the second subgasket 132 does not have a water supply path corresponding to the inactive area 110a of the polymer electrolyte membrane 110.

For example, in a plan view of the second subgasket 132, a region corresponding to the inactive area 110a of the polymer electrolyte membrane 110 does not have a water supply path and is blocked by the second subgasket 132. Therefore, the inactive area 110a of the polymer electrolyte membrane 110 is not exposed to the second surface of the second subgasket 132.

Because the oxygen generation electrode 122 is in contact with water and the water content of the polymer electrolyte membrane 110 on a side of the oxygen generation electrode 122 is relatively high, it is not necessary to additionally supply water. In addition, the catalyst layer of the oxygen generation electrode 122 includes a noble metal oxide such as iridium oxide, an oxide of an iridium alloy, or a combination thereof, and because such a noble metal oxide has a hydrophilic property, it helps to further increase the water content of the oxygen generation electrode 122, so it is not necessary to additionally supply water to the oxygen generation electrode 122.

For example, the first and second subgaskets 131 and 132 may be an overlap type in which edge portions of the hydrogen generation electrode 121 and the oxygen generation electrode 122 are covered by the first and second subgaskets 131 and 132, as illustrated in FIG. 1, but are not limited thereto, and the first and second subgaskets 131 and 132 may be an edge-fit type in which the entire hydrogen generation electrode 121 and the entire oxygen generation electrode 122 are exposed through the first and second windows, respectively.

The first and second subgaskets 131, 132 may be in a form of a film formed of a non-porous material, having good heat resistance and chemical resistance in a temperature range from room temperature to 120 °C, withstanding a pressure of greater than or equal to 100 torque, and having a relatively low gas permeability. For example, each of the first and second subgaskets 131, 132 may include polyimide (PI), polyethylene (PE), polypropylene (PP), polyethylene terephthalate (PET), fluorinated ethylene propylene (FEP), polyethylene naphthalate (PEN), or a combination thereof.

FIG. 3 is a cross-sectional view of a membrane-electrode assembly according to an embodiment. FIG. 4 is a plan view of the membrane-electrode assembly according to FIG. 3.

Referring to FIGS. 3 and 4, the membrane-electrode assembly is the same as the membrane-electrode assembly illustrated in FIGS. 1 and 2, except for further including a first gas diffusion layer 141 positioned on the hydrogen generation electrode 121 and a second gas diffusion layer 142 positioned on the oxygen generation electrode 122.

The first and second gas diffusion layers 141, 142 may provide a gas diffusion path from a flow channel of first and second separators 161, 162 to be described later to the hydrogen generation electrode 121 and the oxygen generation electrode 122 so that a supply fluid may be easily and uniformly supplied to the hydrogen generation electrode 121 and the oxygen generation electrode 122, allow a product to be removed out of the hydrogen generation electrode 121 and the oxygen generation electrode 122, prevent the water content of the polymer electrolyte membrane 110 from rapidly decreasing by storing a certain amount of water, and provide sufficient mechanical strength to the membrane-electrode assembly.

For example, the first gas diffusion layer 141 positioned on the side of the hydrogen generation electrode 121 may be a gas diffusion layer (GDL) of a carbon material, and the second gas diffusion layer 142 positioned on the side of the oxygen generation electrode 122 may be a multi-porous transport layer (MPL) or a porous transport layer (PTL) of a metal material.

For example, the first gas diffusion layer 141 may include an electrically conductive porous member such as carbon paper, carbon cloth, carbon felt, metal paper, metal cloth, metal felt, and the like.

In addition, the second gas diffusion layer 142 may include a plurality of fibers. The plurality of fibers may be integrated in a form of a nonwoven fabric including a plurality of pores. The plurality of fibers may include a metal oxide or a metal. For example, the plurality of fibers may be a metal oxide including titanium dioxide ($TiO_2$), tungsten oxide ($WO_3$), silicon oxide ($SiO_2$), ruthenium oxide ($RuO_2$), ATO, ITO, manganese dioxide ($MnO_2$), or molybdenum trioxide ($MoO_3$), or a metal including titanium (Ti), gold (Au), or stainless steel (SUS). As such, when the second gas diffusion layer 142 includes the plurality of fibers including a metal oxide such as titanium ($TiO_2$), since the metal oxide has a hydrophilic property, it may help to further increase the water content of the oxygen generation electrode 122, and accordingly, there is no need to additionally supply water to the oxygen generation electrode 122.

A diameter and a length of the plurality of fibers may be within a predetermined range. The diameter and the length of the plurality of fibers may be measured by photographing the second gas diffusion layer 142 using a scanning electron microscope (SEM). For example, the diameter of the fiber may be 5 $\mu$m to 100 $\mu$m, and the length of the fiber may be 10 $\mu$m to 2 mm.

A thickness and a porosity of the second gas diffusion layer 142 may be appropriately adjusted to properly secure a diffusion effect of a reactant. For example, the thickness of the second gas diffusion layer 142 may be within a predetermined range. The thickness of the second gas diffusion layer 142 may be measured according to a method of measuring the diameter and the length of the plurality of fibers. The thickness of the second gas diffusion layer 142 may be

30 μm to 500 μm. In addition, the porosity of the second gas diffusion layer 142 may be within a predetermined range. The porosity of the second gas diffusion layer 142 may be measured according to a mercury intrusion method. The porosity of the second gas diffusion layer 142 may be 30 % to 80 %.

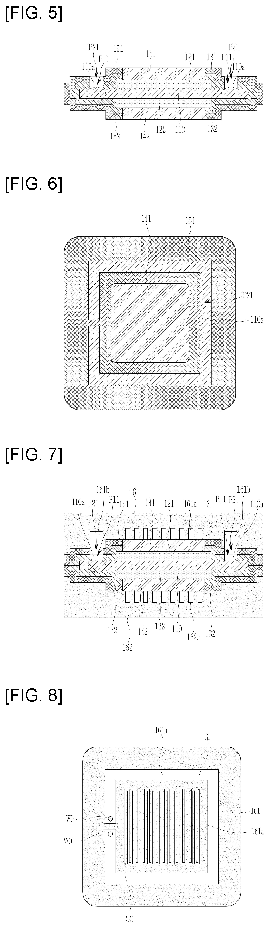

FIG. 5 is a cross-sectional view of a membrane-electrode assembly according to an embodiment. FIG. 6 is a plan view of the membrane-electrode assembly according to FIG. 5.

Referring to FIGS. 5 and 6, the membrane-electrode assembly is the same as the membrane-electrode assembly illustrated in FIGS. 3 and 4, except that the membrane-electrode assembly further includes a first gasket 151 disposed on the first subgasket 131 and surrounding the first gas diffusion layer 141, and a second gasket 152 disposed on the second subgasket 132 and surrounding the second gas diffusion layer 142.

The first gasket 151 may be disposed on the first surface of the inactive area 110a of the polymer electrolyte membrane 110, and the second gasket 152 may be disposed on the second surface of the inactive area 110a of the polymer electrolyte membrane 110.

The first and second gaskets 151 and 152 have a third window and a fourth window, respectively, accommodating the first and second gas diffusion layers 141 and 142, and exposing the first and second gas diffusion layers 141 and 142. For example, the third window may be a hole positioned at a center portion of the first gasket 151 and penetrating the first gasket 151 in a thickness direction. In addition, the fourth window may be a hole positioned at a center portion of the second gasket 152 and penetrating the second gasket 152 in a thickness direction. That is, the third and fourth windows may be vacant holes.

In other words, when a surface of the first gasket 151 facing the hydrogen generation electrode 121 is referred to as a first surface and a surface opposite to the first surface is referred to as a second surface, the first gas diffusion layer 141 may penetrate the first surface and the second surface of the first gasket 151, and the first gas diffusion layer 141 may be exposed to the second surface of the first gasket 151. In addition, when a surface of the second gasket 152 facing the oxygen generation electrode 122 is referred to as a first surface and a surface opposite to the first surface is referred to as a second surface, the second gas diffusion layer 142 may penetrate the first surface and the second surface of the second gasket 152, and the second gas diffusion layer 142 may be exposed to the second surface of the second gasket 152. The first gasket 151 may surround the first gas diffusion layer 141, and the second gasket 152 may surround the second gas diffusion layer 142.

The first gasket 151 has a third water supply path P21 corresponding to the inactive area 110a of the polymer electrolyte membrane 110. In other words, the third water supply path P21 of the first gasket 151 may overlap the inactive area 110a of the polymer electrolyte membrane 110 in the thickness direction.

For example, in a plan view of the first gasket 151, the third water supply path P21 may be positioned in a region corresponding to the inactive area 110a of the polymer electrolyte membrane 110. In addition, the third water supply path P21 may be positioned in a region corresponding to the first water supply path P11 of the first subgasket 131. The third water supply path P21 may be positioned spaced apart from the third window by a predetermined distance, and may surround the third window. For example, the third water supply path P21 may extend to surround the four sides of the third window. However, one end and the other end of the third water supply path P21 may not meet and may be spaced apart from each other. Accordingly, the first gasket 151 may have a single configuration in which the third window portion and the third water supply path P21 portion are connected without being separated.

The third water supply path P21 may be a hole penetrating the first gasket 151 in a thickness direction. That is, the third water supply path P21 may be a vacant hole. Accordingly, the inactive area 110a of the polymer electrolyte membrane 110 may be exposed to the second surface of the first gasket 151 through the third water supply path P21 of the first gasket 151.

When water reaches the inactive area 110a of the polymer electrolyte membrane 110 through the third water supply path P21 of the first gasket 151, a water concentration difference occurs between the inactive area 110a and the active area of the polymer electrolyte membrane 110. As a result, water flows from the inactive area 110a to the active area according to Fick's law of diffusion, which states that water flows from a place having a high water concentration to a place having a low water concentration. The performance of the water electrolysis cell may be maximized by directly supplying water to the polymer electrolyte membrane 110 to increase the water content of the polymer electrolyte membrane 110, thereby improving the ion conductivity of the polymer electrolyte membrane 110, and additionally cooling the membrane-electrode assembly to reduce required energy.

Meanwhile, the second gasket 152 does not have a water supply path corresponding to the inactive area 110a of the polymer electrolyte membrane 110.

For example, in a plan view of the second gasket 152, a region corresponding to the inactive area 110a of the polymer electrolyte membrane 110 does not have a water supply path, and is blocked by the second gasket 152. Accordingly, the inactive area 110a of the polymer electrolyte membrane 110 is not exposed to the second surface of the second gasket 152.

The first and second gaskets 151, 152 are for preventing leakage of a fluid, and may include, for example, ethylene propylene diene monomer (EPDM), neoprene, urethane, acrylonitrile butadiene rubber (NBR), or polytetra-

fluoroethylene (PTFE).

FIG. 7 is a cross-sectional view of a water electrolysis cell according to an embodiment. FIG. 8 is a plan view of the separator illustrated in FIG. 7, illustrating a surface facing the membrane-electrode assembly.

Referring to FIGS. 7 and 8, the water electrolysis cell includes a membrane-electrode assembly, a first separator 161 positioned on a first surface of the membrane-electrode assembly, and a second separator 162 positioned on a second surface of the membrane-electrode assembly.

As described above, the membrane-electrode assembly includes a polymer electrolyte membrane 110 having an active area and an inactive area 110a surrounding the active area, a hydrogen generation electrode 121 positioned on a first surface of the active area of the polymer electrolyte membrane 110, an oxygen generation electrode 122 positioned on a second surface of the active area of the polymer electrolyte membrane 110, a first gasket 151 disposed on a first surface of the inactive area 110a of the polymer electrolyte membrane 110 and surrounding the hydrogen generation electrode 121, and a second subgasket 132 disposed on a second surface of the inactive area 110a of the polymer electrolyte membrane 110 and surrounding the oxygen generation electrode 122. The first subgasket 131 may have a first water supply path P11 exposing the inactive area 110a of the polymer electrolyte membrane 110.

In addition, the membrane-electrode assembly may further include a first gas diffusion layer 141 positioned on the hydrogen generation electrode 121 and a second gas diffusion layer 142 positioned on the oxygen generation electrode 122, and may further include a first gasket 151 disposed on the first subgasket 131 and surrounding the first gas diffusion layer 141, and a second gasket 152 disposed on the second subgasket 132 and surrounding the second gas diffusion layer 142. The first gasket 151 may have a third water supply path P21 corresponding to the inactive area 110a of the polymer electrolyte membrane 110.

The first separator 161 has a first flow channel 161a for supplying a first gas to the hydrogen generation electrode 121, and the second separator 162 has a second flow channel 162a for supplying a second gas to the oxygen generation electrode 122. A gas inlet GI and a gas outlet GO may be respectively positioned at one end and the other end of each of the first and second flow channels 161a, 162a.

The first separator 161 may have a water channel 161b corresponding to the inactive area 110a of the polymer electrolyte membrane 110. In other words, the water channel 161b of the first separator 161 may overlap the inactive area 110a of the polymer electrolyte membrane 110 in a thickness direction.

For example, in a plan view of the first separator 161, the water channel 161b may be positioned in a region corresponding to the inactive area 110a of the polymer electrolyte membrane 110. The water channel 161b may be positioned to be spaced apart from the first flow channel 161a by a predetermined distance, and may surround the first flow channel 161a. For example, the water channel 161b may extend to surround four sides of the first flow channel 161a. However, one end and the other end of the water channel 161b may not meet and may be spaced apart from each other. A water inlet WI and a water outlet WO may be respectively positioned at one end and the other end of the water channel 161b. Accordingly, the first separator 161 includes only a total of four minimized inlets and outlets, which are the gas inlet GI and the gas outlet GO of the first flow channel 161a, and the water inlet WI and the water outlet WO of the water channel 161b, thereby enabling a compact configuration.

For example, an area ratio of the water channel 161b to a total area of the first separator 161 may be 10 % to 80 %, and a depth ratio of the first water channel 161b to a total thickness of the first separator 161 may be 5 % to 40 %. When the area ratio of the water channel 161b is less than 10% or the depth ratio of the first water channel 161b is less than 5%, water may not be sufficiently supplied to the inactive area 110a of the polymer electrolyte membrane 110 through the first and third water supply paths P11 and P21. When the area ratio of the water channel 161b is greater than 80% or the depth ratio of the first water channel 161b is greater than 40%, too much water may be supplied to the inactive area 110a of the polymer electrolyte membrane 110 to cause a flooding phenomenon, or a water concentration difference may become small such that water may not be supplied toward the active area by Fick's law of diffusion.

As water flows into the water inlet WI of the first separator 161 and flows along the water channel 161b, water is supplied to the inactive area 110a of the polymer electrolyte membrane 110 through the first water supply path P11 of the first subgasket 131, and remaining water is discharged to the water outlet WO of the first separator 161. When water reaches the inactive area 110a of the polymer electrolyte membrane 110 through the first water supply path P11 of the first subgasket 131, a water concentration difference occurs between the inactive area 110a and the active area of the polymer electrolyte membrane 110. As a result, water flows from the inactive area 110a to the active area according to Fick's law of diffusion that water flows from a place having a high water concentration to a place having a low water concentration. By directly supplying water to the polymer electrolyte membrane 110 to increase the water content of the polymer electrolyte membrane 110, thereby improving the ion conductivity of the polymer electrolyte membrane 110, and additionally cooling the membrane-electrode assembly to reduce required energy, the performance of the water electrolysis cell may be maximized.

[**Mode for Invention**]

**[Preparation Example: Preparation of a membrane-electrode assembly]**

Commercial $IrO_x$ black powder (Merck Sigma-Aldrich, Iridium(IV) oxide 206237) as a catalyst for an oxygen generation reaction and Nafion as an ion conductor were mixed in normal propyl alcohol (nPA) as a solvent such that a weight ratio thereof is 1:0.2 ($IrO_x$:Nafion). The solvent was further mixed such that a solid content is 5 wt%. Spray coating was performed on a coating base film (PI Advanced Materials, PI film) having a width of 2 cm, a length of 2 cm, and a thickness of about 200 μm such that a loading amount is 0.5 mg/cm$^2$ to form an oxygen generation electrode having a thickness of about 10 μm.

Pt/C carbon having a Pt loading amount of 50 wt% and Nafion as an ion conductor were mixed such that a weight ratio thereof is 1:1.2 (Pt/C:Nafion), and a solvent was further mixed such that a solid content is 5 wt%. Spray coating was performed on a coating base film (PI Advanced Materials, PI film) having a width of 2 cm, a length of 2 cm, and a thickness of about 200 μm such that a loading amount is 0.5 mg/cm$^2$ to form a hydrogen generation electrode having a thickness of about 30 μm.

The oxygen generation electrode and the hydrogen generation electrode were sequentially overlapped on both surfaces of a commercial NR212 manufactured by Chemours having a thickness of about 50.8 μm as a polymer electrolyte membrane, respectively, hot-pressed at 5 N under a temperature of 150 °C for 5 minutes, and then the coating base film was removed to prepare a polymer electrolyte membrane-electrode assembly.

As illustrated in FIGS. 7 and 8, the first subgasket 131 having the first water supply path P11 and the second subgasket 132 not having a water supply path were laminated on both surfaces of the prepared polymer electrolyte membrane-electrode assembly, and then the first gas diffusion layer 141 of a carbon material and the second gas diffusion layer 142 of a metal material, the first gasket 151 having the third water supply path P21 and the second subgasket 132 not having a water supply path, and the first separator 161 having the water channel 161b and the second separator 162 not having a water channel were sequentially stacked to prepare a water electrolysis cell according to an Example.

In addition, a water electrolysis cell according to a Comparative Example was prepared in the same manner as the Example, except that the first subgasket 131 not having the first water supply path P11, the first gasket 151 not having the third water supply path P21, and the first separator 161 not having the water channel 161b were used.

**[Experimental Example: Measurement of water content of polymer electrolyte membrane]**

The water content of the polymer electrolyte membrane was measured for the water electrolysis cells according to the Example and the Comparative Example, and the results are shown in Table 1.

The water content was measured by a lambda measurement method using an X-ray microtomography device.

(1) Configuration of experimental device

1) X-ray microtomography device: Synchrotron-based X-ray microtomography system of Advanced Light Source (ALS).

- X-ray light source: using a synchrotron X-ray light source, provides very high photon flux and high spatial resolution compared to general laboratory equipment.
- Spatial resolution: has a high resolution of about 1 μm, and may precisely visualize water distribution and density change per each pixel.
- Temporal resolution: each imaging session is set to a temporal resolution of about 10 minutes, and thus may track dynamic changes of material movement in chronological order.

2) Sample fixing device and holder: uses a specially designed sample holder to fix a polymer electrolyte membrane sample.

- Sample fixing device structure: is designed to accurately maintain a position of the polymer electrolyte membrane sample and generate various water boundaries.
- Gas flow control: supplies dry nitrogen ($N_2$) to one surface of the polymer electrolyte membrane sample and supplies vapor or liquid containing moisture to the other surface, thereby setting various boundary conditions. Through this, an environment is created in which one surface of the polymer electrolyte membrane is dried and the opposite surface contacts vapor or liquid.
- Temperature and humidity control function: may precisely control temperature and humidity in the sample holder, and thus may maintain a constant environment during an experiment.

- Water supply function to a gasket flow channel: is designed to supply water to the gasket flow channel and control a flow rate, and is used together with a precision pump.

(2) Experimental procedure

1) Initial sample preparation: A polymer electrolyte membrane sample in a dry state, a polymer electrolyte membrane sample in a vapor saturated state, and a polymer electrolyte membrane sample in a liquid saturated state are respectively prepared, and an experiment is performed. Initial states of the samples are set as follows.

- Dry state: has a water content of $\lambda = 2$.
- Vapor saturated state: has a water content of $\lambda = 14$.
- Liquid saturated state: has a water content of $\lambda = 22$.

2) Experimental details: Various boundary conditions are set to clearly observe water distribution and moisture movement of the polymer electrolyte membrane.
- 5 cc/min of water is supplied toward the gasket of the hydrogen generation electrode, and 10 cc/min of water is supplied toward the gasket of the oxygen generation electrode in the same manner as actual water electrolysis.
- Profile change over time: An image of water distribution for each time period is taken using X-ray microtomography. It is confirmed that initially, the λ value starts at 2, gradually increases over time, and stabilizes at a specific λ value.

[Table 1]

| | Example | Example | Example | Comparative Example | Comparative Example | Comparative Example |
|---|---|---|---|---|---|---|
| Lambda (λ) | HER λ | OER λ | Average λ | HER λ | OER λ | Average λ |
| Value | 20.3 | 22.0 | 21.2 | 5.5 | 22.1 | 13.8 |
| Condition | 5cc/min | 10cc/min | - | - | 10cc/min | - |

Referring to Table 1, in the case of the water electrolysis cell according to the Example, as water is not supplied to the hydrogen generation electrode side through the first flow channel but is supplied only through the water channel, and water is supplied to the oxygen generation electrode side through the second flow channel, water flows from the inactive area 110a to the active area according to Fick's law of diffusion, thereby directly supplying water to the polymer electrolyte membrane 110, and thus it may be seen that the water content of the polymer electrolyte membrane 110 is increased.
On the other hand, in the case of the water electrolysis cell according to the Comparative Example, water is not supplied to the hydrogen generation electrode side at all, and water is supplied to the oxygen generation electrode side through the second flow channel. Accordingly, it may be seen that in the water electrolysis cell according to the Comparative Example, the polymer electrolyte membrane has a lower water content compared to the water electrolysis cell according to the Example.
Although the preferred embodiments of the present disclosure have been described above, the present disclosure is not limited thereto, and may be variously modified and carried out within the scope of the claims, the description, and the accompanying drawings, and it is natural that this also falls within the scope of the present disclosure.

[Description of Reference Numerals]

110: polymer electrolyte membrane
110a: inactive area
121: hydrogen generation electrode
122: oxygen generation electrode
131: first subgasket
132: second subgasket
P11: first water supply path
141: first gas diffusion layer
142: second gas diffusion layer
151: first gasket

152: second gasket
P21: third water supply path
161: first separator
161a: first flow channel
162: second separator
162a: second flow channel
161b: water channel

**[Industrial Applicability**]

The present disclosure relates to a membrane-electrode assembly for a water electrolysis cell and a water electrolysis cell including the same, and may maximize the performance of the water electrolysis cell by directly supplying water to the polymer electrolyte membrane to increase the water content of the polymer electrolyte membrane, thereby improving the ion conductivity of the polymer electrolyte membrane, and additionally cooling the membrane-electrode assembly to reduce required energy.

## Claims

**1.** A membrane-electrode assembly for a water electrolysis cell comprising:

a polymer electrolyte membrane having an active area and an inactive area surrounding the active area;
a hydrogen generation electrode positioned on a first surface of the active area of the polymer electrolyte membrane;
an oxygen generation electrode positioned on a second surface of the active area of the polymer electrolyte membrane;
a first subgasket disposed on a first surface of the inactive area of the polymer electrolyte membrane and surrounding the hydrogen generation electrode; and a second subgasket disposed on a second surface of the inactive area of the polymer electrolyte membrane and surrounding the oxygen generation electrode,
wherein the first subgasket has a first window accommodating the hydrogen generation electrode, and a first water supply path surrounding the first window and exposing the inactive area of the polymer electrolyte membrane.

**2.** The membrane-electrode assembly for a water electrolysis cell of claim 1, wherein the first window penetrates the first subgasket to expose the hydrogen generation electrode, and the first water supply path penetrates the first subgasket to expose the inactive area of the polymer electrolyte membrane.

**3.** The membrane-electrode assembly for a water electrolysis cell of claim 1, wherein the first window and the first water supply path are vacant holes.

**4.** The membrane-electrode assembly for a water electrolysis cell of claim 1, wherein the first water supply path extends to surround four sides of the first window, and one end and the other end of the first water supply path do not meet and are spaced apart from each other.

**5.** The membrane-electrode assembly for a water electrolysis cell of claim 1, wherein the second subgasket has a second window accommodating the oxygen generation electrode, and does not have a water supply path exposing the inactive area of the polymer electrolyte membrane.

**6.** The membrane-electrode assembly for a water electrolysis cell of claim 5, wherein the oxygen generation electrode includes a noble metal oxide catalyst including iridium oxide, an oxide of an iridium alloy, or a combination thereof.

**7.** The membrane-electrode assembly for a water electrolysis cell of claim 1, wherein the membrane-electrode assembly for a water electrolysis cell further includes:
a first gas diffusion layer positioned on the hydrogen generation electrode; and a second gas diffusion layer positioned on the oxygen generation electrode.

**8.** The membrane-electrode assembly for a water electrolysis cell of claim 7, wherein the first gas diffusion layer includes an electrically conductive porous member including carbon paper, carbon cloth, carbon felt, metal paper, metal cloth,

metal felt, or a combination thereof.

**9.** The membrane-electrode assembly for a water electrolysis cell of claim 7, wherein the second gas diffusion layer includes a plurality of fibers integrated in a form including a plurality of pores, and the plurality of fibers includes a metal oxide or a metal.

**10.** The membrane-electrode assembly for a water electrolysis cell of claim 7, wherein the membrane-electrode assembly for a water electrolysis cell further includes:

a first gasket disposed on the first subgasket and surrounding the first gas diffusion layer; and a second gasket disposed on the second subgasket and surrounding the second gas diffusion layer,
wherein the first gasket has a third window accommodating the first gas diffusion layer, and a third water supply path surrounding the third window and exposing the first water supply path of the first gas diffusion layer.

**11.** A water electrolysis cell comprising:

the membrane-electrode assembly according to claim 1;
a first separator positioned on a first surface of the membrane-electrode assembly; and a second separator positioned on a second surface of the membrane-electrode assembly,
wherein the first separator has a flow channel positioned in a region corresponding to the hydrogen generation electrode, and a water channel surrounding the first flow channel and positioned in a region corresponding to the first water supply path.

**12.** The water electrolysis cell of claim 11, wherein the water channel extends to surround four sides of the flow channel, and one end and the other end of the water channel do not meet and are spaced apart from each other.

**13.** The water electrolysis cell of claim 11, wherein one end of the water channel has a water inlet, and the other end of the water channel has a water outlet.

**14.** The water electrolysis cell of claim 11, wherein an area ratio of the water channel to a total area of the first separator is 10% to 80%, and a depth ratio of the water channel to a total thickness of the first separator is 5% to 40%.

**15.** The water electrolysis cell of claim 11, wherein the water electrolysis cell further includes:

a first gas diffusion layer positioned on the hydrogen generation electrode; and a second gas diffusion layer positioned on the oxygen generation electrode,
wherein the second gas diffusion layer includes a plurality of fibers integrated in a form including a plurality of pores, and the plurality of fibers includes a metal oxide or a metal.

**16.** The water electrolysis cell of claim 15, wherein the water electrolysis cell further includes:

a first gasket disposed on the first subgasket and surrounding the first gas diffusion layer; and a second gasket disposed on the second subgasket and surrounding the second gas diffusion layer,
wherein the first gasket has a third window accommodating the first gas diffusion layer, and a third water supply path surrounding the third window and exposing the first water supply path of the first gas diffusion layer.

[FIG. 1]

110a
P11
121
131
P11
110a
122
110
132

[FIG. 2]

121
131
P11
110a

[FIG. 3]

110a
P11
141
121
131
P11
110a
142
122
110
132

[FIG. 4]

141
131
P11
110a

[FIG. 5]

P21
151
141
121
131
P11
P21
110a
P11
110a
152
142
122
110
132

[FIG. 6]

141
151
P21
110a

[FIG. 7]

161b
161
161b
110a
P21
P11
151
141
121
161a
131
P11
P21
110a
152
142
122
110
162a
132
162

[FIG. 8]

161b
GI
WI
161
WO
161a
GO

**INTERNATIONAL SEARCH REPORT**

International application No. **PCT/KR2024/018459**

**A. CLASSIFICATION OF SUBJECT MATTER**

**C25B 1/04**(2006.01)i; **C25B 9/19**(2021.01)i; **C25B 13/08**(2006.01)i; **C25B 9/63**(2021.01)i; **C25B 9/67**(2021.01)i

According to International Patent Classification (IPC) or to both national classification and IPC

**B. FIELDS SEARCHED**

Minimum documentation searched (classification system followed by classification symbols)

C25B 1/04(2006.01); C25B 9/00(2006.01); C25B 9/04(2006.01); C25B 9/08(2006.01); C25B 9/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수전해셀(water electrolysis cell), 세퍼레이터(separator), 고분자 전해질막(polymer electrolyte membrane), 수소 발생 전극(hydrogen generating electrode), 산소 발생 전극(oxygen generating electrode), 가스켓(gasket), 물 공급 경로(water supply path), 가스 확산층(gas diffusion layer), 촉매(catalyst)

**C. DOCUMENTS CONSIDERED TO BE RELEVANT**

| Category* | Citation of document, with indication, where appropriate, of the relevant passages | Relevant to claim No. |
|---|---|---|
| X | US 2010-0187102 A1 (SCHMITT, Edwin W. et al.) 29 July 2010 (2010-07-29) See paragraphs [0006]-[0008] and [0042]-[0060]; and figures 4-5. | 1-10 |
| Y | | 11-16 |
| Y | JP 2001-081589 A (MITSUBISHI HEAVY INDUSTRIES, LTD.) 27 March 2001 (2001-03-27) See paragraphs [0014]-[0027]; and figure 5. | 11-16 |
| A | KR 20-0283468 Y1 (CHO, Tong Rae et al.) 26 July 2002 (2002-07-26) See entire document. | 1-16 |
| A | US 2011-0198217 A1 (NAKAZAWA, Koji et al.) 18 August 2011 (2011-08-18) See entire document. | 1-16 |
| A | JP 2015-089949 A (HONDA MOTOR CO., LTD.) 11 May 2015 (2015-05-11) See entire document. | 1-16 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 February 2025** | **26 February 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/018459**

| Patent document cited in search report | Publication date (day/month/year) | Patent family member(s) | Publication date (day/month/year) |
|---|---|---|---|
| US 2010-0187102 A1 | 29 July 2010 | US 8349151 B2 | 08 January 2013 |
| JP 2001-081589 A | 27 March 2001 | JP 4451954 B2 | 14 April 2010 |
| KR 20-0283468 Y1 | 26 July 2002 | KR 10-2002-0072193 A | 14 September 2002 |
| US 2011-0198217 A1 | 18 August 2011 | JP 2010-216009 A | 30 September 2010 |
| | | JP 4856770 B2 | 18 January 2012 |
| | | US 8709220 B2 | 29 April 2014 |
| JP 2015-089949 A | 11 May 2015 | JP 6090790 B2 | 08 March 2017 |

Form PCT/ISA/210 (patent family annex) (July 2022)